# EUROPEAN PATENT SPECIFICATION

(11) **EP 1 710 334 B1**
(45) Date of publication and mention of the grant of the patent: **16.01.2008**
(21) Application number: 06002839.6
(22) Date of filing: 13.02.2006
(51) Int. Cl.: D03D 47/34, D03D 47/36, D04B 15/48, B65H 51/20, B65H 51/22

(54) **Positive yarn feeder for textile machines**
Fadenliefergerät mit positiver Fadenlieferung für Textilmaschinen
Fournisseur de fil positif pour machines textiles

(30) Priority: 06.04.2005 IT TO20050225
(43) Date of publication of application: 11.10.2006
(73) Proprietor: L.G.L. Electronics S.p.A., 24024 Gandino (Bergamo) (IT)
(72) Inventor: Castelli, Rosario, 24024 Grandino (BG) (IT); Gotti, Luca, 24021 Albino (BG) (IT); Gotti, Andrea, 24021 Albino (BG) (IT)
(74) Representative: Spandonari, Carlo

(56) References cited:
- DE-A1- 10 234 545
- DE-A1-7102004 009 05
- US-A- 5 912 541
- US-B1- 6 351 053
- PATENT ABSTRACTS OF JAPAN vol. 2003, no. 12, 5 December 2003 (2003-12-05) & JP 2005 160278 A (NISSAN MOTOR CO LTD), 16 June 2005 (2005-06-16)

## Description

The present invention relates to a positive yarn feeder for textile machines and the like, particularly of the type provided with a voltage-controlled or current-controlled motor.

The above feeders usually draw the yarn from a spool and feed it with a regulated speed and tension to a machine arranged downstream, such as a loom, a knitting machine, a spooler, and the like.

The feeder comprises a motor which drives a yarn-feeding reel on which a number of yarn loops are wound. The motor is driven by an electronic power supply unit consisting of a bridge of electronic switches controlled by a control unit which processes various signals from external sensors, such as yarn tension signals, voltage signals and/or current signals deriving from the driving of the motor, feedback signals from speed sensors and/or position sensors associated to the motor, etc. On the basis of such signals, the control unit cyclically closes the switches of the electronic power supply unit in order to control the motor speed and, consequently, the yarn speed, which is proportional to the motor speed. The above control units are substantially capable of operating in real time by means of circuits which implement voltage/current, nested control loops, which may be speed-controlled loops or position-controlled loops.

An example of this type of yarn feeder is described in DE 102 34 545 A1.

The positive yarn feeders of the prior art utilize stepping motors or, preferably, brushless motors, which are more suited to applications in which high speeds and high accelerations are required, such as the present application. In particular, the brushless motors currently in use for weft feeders comprise a hollow, cylindrical stator provided with field windings that are received in a fine groove pattern cut in the inner surface of the stator.

However, as well known to the persons skilled in the art, very expensive and accurate machinings are required to carry out the above arrangement of grooves and windings, mainly in consideration of the small size of the motors used for yarn feeders, which are about 45 to 50 mm in diameter. Moreover, this arrangement makes it difficult to install position sensors within the stator, as required to subject the motor to a speed/position feedback control.

Furthermore, the use of brushless motors of the above type in positive yarn feeders causes the driving torque to be affected by so-called "ripple" phenomena. Such phenomena limit the passband of the control system, thereby affecting the accuracy of the yarn-feeding process with consequent flaws in the evenness of the fabric or mesh. These problems have become more and more serious with increasing speeds of the yarn-processing machines, about 1000m of yarn per minute at the present date.

A particular type of brushless motor is the so-called reluctance motor, an example of which is described in US 6,351,053 B1. The motor of US 6,351,053 B1 comprises a substantially cylindrical stator with six stator poles each having a respective coil wound thereon. The rotor has a columnar shape with four rotor poles projecting outwardly from the outer circumference of the columnar rotor. Rotors of reluctance motors are conventionally made of iron, in order to be influenced by the magnetic field generated by the coils. As stated in the background part of US 6,351,053 B1, reluctance motors are also affected by problems of torque ripple.

Therefore, it is a main object of the present invention to provide a positive yarn feeder for textile machines and the like, in which the control of the yarn-feeding process is more regular and more accurate then in the known feeders.

It is another object of the invention to provide a positive yarn feeder in which the torque ripple, in the motor that drives the yarn-feeding reel, is considerably reduced, or even deleted, with respect to the known feeders provided with brushless motors.

It is a further object of the invention to improve the above yarn feeder to have low manufacturing costs and a small overall size.

The above object and other aims and advantages, which will better appear below, are achieved by a positive yarn feeder having the features recited in claim 1, while other advantageous features are stated in the other claims.

A few preferred embodiments of the invention will be now described with reference to the attached drawings, wherein:
Fig. 1 is a general diagram of a positive yarn feeder of the type to which the invention is referred;
Fig. 2 is a diagrammatical, front view of a positive yarn feeder of the type to which the invention is referred;
Fig. 3 is a view in transverse, cross-section of the motor incorporated in the feeder according to a first preferred embodiment of the invention;
Fig. 4 is a perspective view of the motor incorporated in the feeder according to a second preferred embodiment of the invention;
Fig. 5 is a view in tranverse, cross-section of the stator of the motor of Fig. 4;
Fig. 6 is a diagram showing the driving torque of the motor as a function of the angular position with different values of the armature current;
Fig. 7 is a view in transverse, cross-section of the motor incorporated in the feeder according to a third preferred embodiment of the invention.

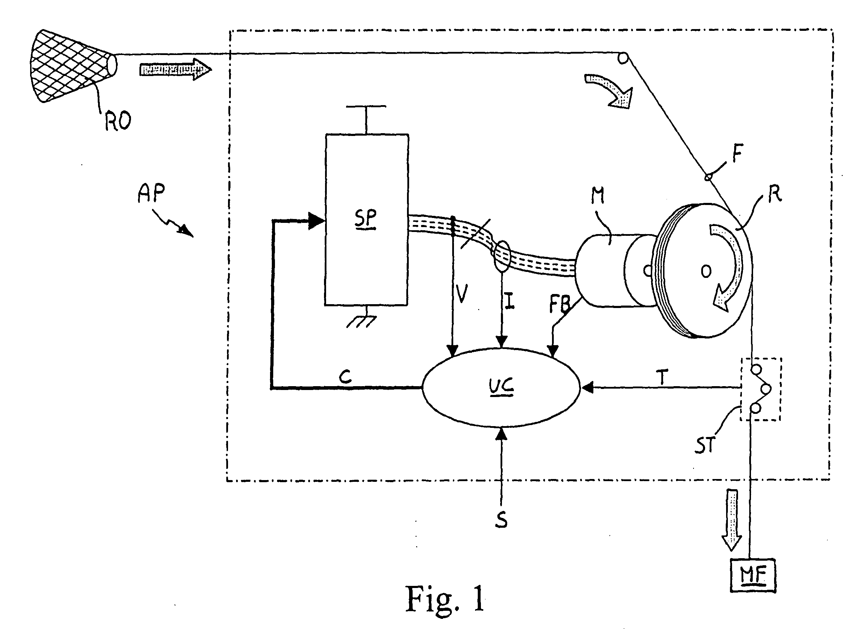

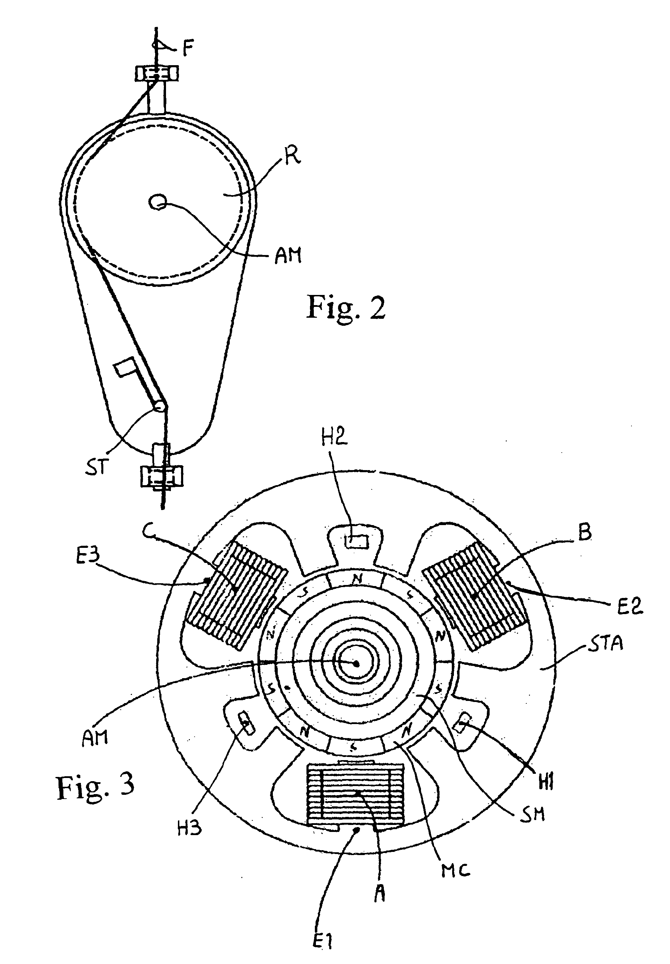

With reference to Figs. 1, 2, a positive yarn feeder AP draws yarn F from a spool RO and feed the yarn to a machine MF, such as a loom, a knitting machine, a spooler, and the like, at a regulated speed and tension. Yarn F drawn from spool RO is wound into a plurality of loops on a reel R keyed to the driving shaft of a motor M, then passes through an electronic tension sensor ST, and finally is fed to machine MF.

Motor M is a permanent-magnet, synchronous brushless motor driven by an electronic power supply unit via a three-phase switching bridge SP provided with electronic switches. A control unit UC receives a yarn tension signal T from sensor ST, voltage signals V and current signals I deriving from the driving of the motor, feedback signals FB from position sensors associated to the motor, which will be better described below, as well as general external signals S, and generates a sequence of commands C which drive bridge SP to feed the yarn with a desired speed and tension.

Having now reference to Fig. 3, motor M according to a first preferred embodiment of the invention is provided with a stator STA consisting of a hollow cylindrical housing having nine elongated pole shoes which radially project inwards, three of which E1, E2, E3, are equally spaced at 120° from each other and support respective excitation coils A, B, C. The rotor of the motor consists of a thin cylindrical magnet MC that is coaxially supported on the driving shaft AM via a support SM. Cylindrical magnet MC is polarized radially with alternating poles north N and south S. The two side-by-side pole shoes of each pair without coils have a respective Hall sensor H1, H2, H3, arranged therebetween and connected for sending position signals to control unit UC.

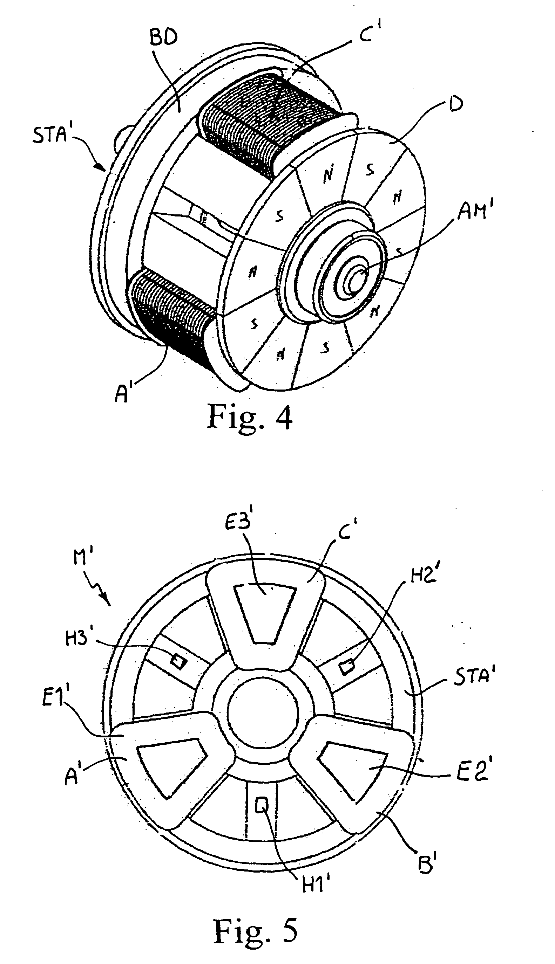

According to a second preferred embodiment of the invention, shown in Figs. 4 and 5, motor M' has a stator STA' in the shape of a substantially cylindrical, hollow housing, with a disc-shaped base BD and nine elongated pole shoes rising from the base in a direction parallel to the axis of the base, each piece being in the shape of a longitudinal part of cylinder. Three of said pieces E1', E2', E3' are equally spaced at 120° from each other and support respective excitation coils A', B', C'. The rotor consists of a driving shaft AM' having a coaxial, disc-shaped magnet D keyed thereto, which is polarized longitudinally with alternating poles north N and south S. Magnet D is arranged in front of the coils near the free ends thereof. The two side-by-side pole shoes of each pair without coils have a respective Hall sensor H1', H2', H3', arranged therebetween and connected to send position signals to control unit UC.

With both the above arrangements, the magnetic member, i.e., the cylinder or the disc, may have four or five pairs of pole shoes (five in the figures), or a number of pairs that is a multiple of four or five, depending on design requirements concerning the speed control or position control of the motor, as well known to the persons skilled in the art.

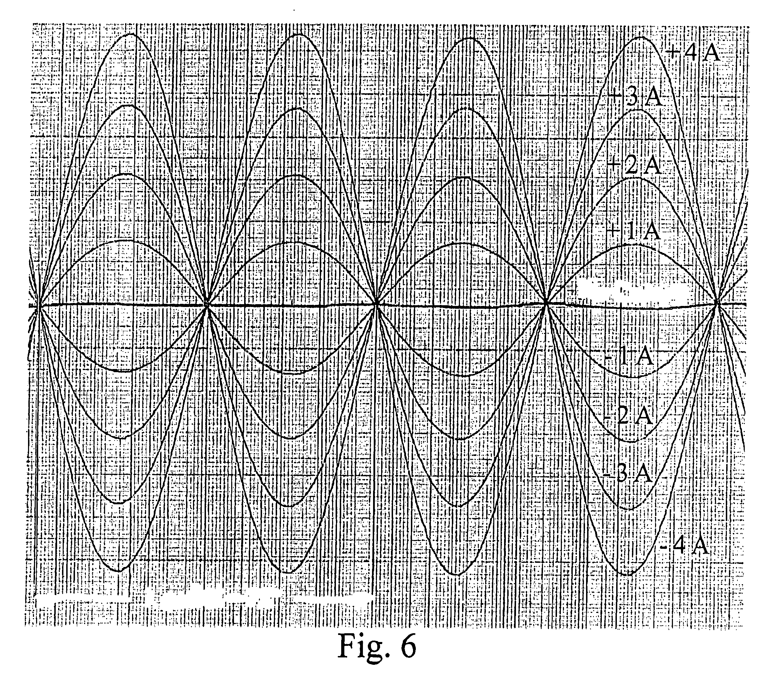

The diagram of Fig. 6 shows the driving torque as a function of the angular position with different armature currents (in Ampere), with the motor subjected to a trapezoidal driving. As the person skilled in the art will appreciate, the curves have a synusoidal shape and the residual torque, i.e., the resisting torque measured at zero-current, is very low.

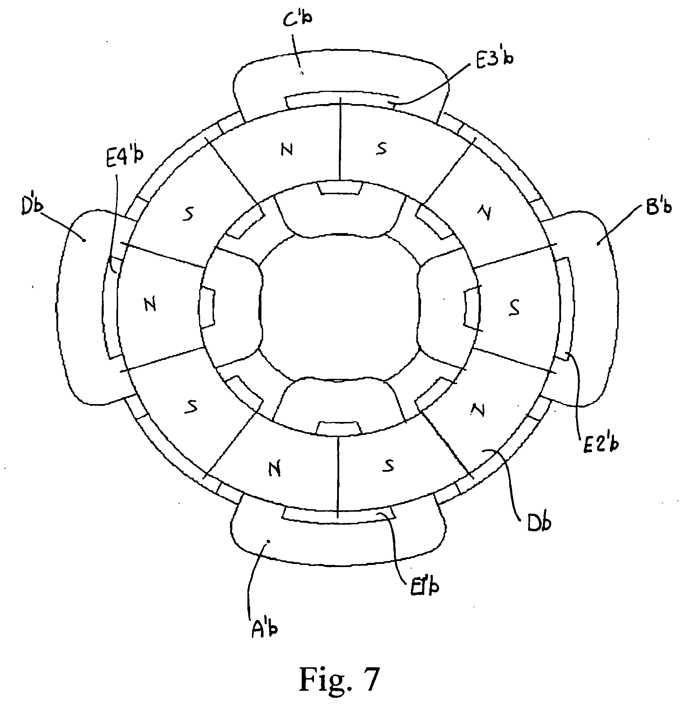

In a third embodiment of the invention, shown in Fig. 7, the construction of the motor is similar to the second embodiment but the motor is biphase and has a stator provided with eight pole shoes, four of which E1'b, E2'b, E3'b, E4'b, are equally spaced at right angles from each other and support respective excitation coils A'b, B'b, C'b, D'b. The magnetic disc Db has five pole shoes.

With a motor according to the invention, the excitation coils do not need to be wound directly on the pole shoes of the stator, as required with the traditional motors. On the contrary, the coils can be wound separately and then installed within the stator, with an enhanced ease of installation.

Moreover, the stator excitation coils are only three, in case of three-phase motors, or four, in case of biphase motors, with consequent possibility of manufacturing small-sized motors at low cost.

Furtheremore, since the above motors have a high merit coefficient, with a high efficiency in converting the electric power is into driving torque, the driving torque is increased with respect to the traditional motors, for equal size.

A further advantage of the invention is that the driving torque supplied by the motor is affected by a low value of harmonic distortion and residual torque and, when subjected to a sinusoidal driving, by a very low level of torque ripple, with consequent enhanced performance of the whole system.

Furthermore, since the Hall sensors are arranged in the angular gaps between the coils, they do not require any additional housing to be installed, with further opportunity of manufacturing small-sized motors at low cost.

A preferred embodiment of the invention has been described herein, but of couse many changes may be made within dhe scope of the inventive concept.

## Claims

1. A yarn-feeder for textile machines, comprising a yarn winding reel (R) driven by a permanent-magnet, synchronous brushless motor to draw the yarn from a spool (RO) and to feed the yarn to a textile machine arranged downstream (MF), said motor (M, M') comprising a stator (STA, STA') consisting of a substantially cylindrical, hollow housing having at least three elongated pole shoes (E1-E3, E1'-E3') having respective excitation coils wound thereon (A, B, C, A', B', C'), and a magnetic rotor which is coaxially supported on the driving shaft (AM, AM') near the coils, **characterized in that** at least one elongated pole shoe free from excitation coils is arranged between each pair of adjacent pole shoes engaged by coils, and **in that** said magnetic rotor comprises a magnetic member having a circular profile with a plurality of alternating poles.

2. The yarn-feeder of claim 1, **characterized in that** said magnetic member consists of a thin cylinder (MC) made of a radially polarized, magnetic material with alternating poles, and said pole shoes (E1, E2, E3) radially project inwards from the stator about the axis of rotation of the rotor.

3. The yarn-feeder of claim 1, **characterized in that** said magnetic member consists of a thin disc (D) made of a magnetic material that is polarized longitudinally with alternating poles in the direction of its thickness, and said pole shoes (E1'-E3', El'bE4'b) project parallel to the axis of rotation of the rotor.

4. The yarn-feeder of any of claims 1 to 3, **characterized in that** said stator comprises nine elongated pole shoes, three of which (E1-E3, E1'-E3') are equally spaced at 120° from each other and support respective excitation coils (A, B, C, A', B', C'), and said magnetic member has four pairs of pole shoes.

5. The yarn-feeder of claim 4, **characterized in that** said magnetic member has a number of pairs of pole shoes that is a multiple of four.

6. The yarn-feeder of any of claims 1 to 3, **characterized in that** said stator comprises nine elongated pole shoes, three of which (E1-E3, E1'-E3') are equally spaced at 120° from each other and support said excitation coils (A, B, C, A', B', C'), and said magnetic member has five pairs of pole shoes.

7. Tha yarn-feeder of claim 6, **characterized in that** said magnetic member has a number of pairs of pole shoes that is a multiple of five.

8. The yarn-feeder of claim 3, **characterized in that** said stator comprises eight pole shoes, four of which (E1'b, E2'b, E3'b, E4'b) are equally spaced at right angles from each other and support respective excitation coils (A'b, B'b, C'b, D'b), and said thin disc (Db) has five pairs of pole shoes.

9. The yarn-feeder of any of claims 1 to 8, wherein the motor (M, M') is controlled by a control unit (UC) via an electronic power supply unit, **characterized in that** a plurality of Hall sensors (H1-H3, H1', H3') are arranged in the angular gaps between the coils near the magnetic member and are connected to send position signals to said control unit.

## Patentansprüche

1. Garnzuführer für Textilmaschinen, mit einer Garnwickelspule (R), die durch einen synchronen bürstenlosen Motor mit Permanentmagnet angetrieben ist, um das Garn von einer Garnrolle (RO) zu ziehen und das Garn einer stromabwärts angeordneten Textilmaschine (MF) zuzuführen, wobei der Motor (M, M') einen Stator (STA, STA') umfasst, der aus einem im Wesentlichen zylindrischen, hohlen Gehäuse mit mindestens drei länglichen Polschuhen (E1-E3, E1'-E3') mit zugehörigen darauf gewickelten Anregungsspulen (A, B, C, A', B', C') und einem magnetischen Rotor besteht, der nahe den Spulen koaxial auf der Antriebswelle (AM, AM') gelagert ist, **dadurch gekennzeichnet, dass** mindestens ein länglicher Polschuh ohne Anregungsspulen zwischen jedem Paar benachbarter, durch Spulen besetzter Polschuhe angeordnet ist, und dass der magnetische Rotor ein magnetisches Element mit einem kreisförmigen Profil mit mehreren alternierenden Polen umfasst.

2. Garnzuführer nach Anspruch 1,
**dadurch gekennzeichnet, dass** das magnetische Element aus einem dünnen Zylinder (MC) besteht, der aus einem radial polarisierten magnetischen Material mit alternierenden Polen hergestellt ist, und dass die Polschuhe (E1, E2, E3) von dem Stator um die Drehachse des Rotors radial nach innen vorstehen.

3. Garnzuführer nach Anspruch 1,
**dadurch gekennzeichnet, dass** das magnetische Element aus einer dünnen Scheibe (D) besteht, die aus einem magnetischen Material hergestellt ist, das in Längsrichtung mit alternierenden Polen in der Richtung seiner Dicke polarisiert ist, und dass die Folschuhe (E1'-E3', E1'b-E4'b) parallel zu der Drehachse des Rotors vorstehen.

4. Garnzuführer nach einem der Ansprüche 1 bis 3,
**dadurch gekennzeichnet, dass** der Stator neun längliche Polschuhe umfasst, von denen drei (E1-E3, E1'-E3') voneinander gleichmäßig um 120° beabstandet sind und zugehörige Anregungsspulen (A, B, C, A', B', C') lagern, und dass das magnetische Element vier Polschuhpaare aufweist.

5. Garnzuführer nach Anspruch 4,
**dadurch gekennzeichnet, dass** das magnetische Element eine Anzahl von Polschuhpaaren aufweist, die ein Mehrfaches von vier ist.

6. Garnzuführer nach einem der Ansprüche 1 bis 3,
**dadurch gekennzeichnet, dass** der Stator neun längliche Polschuhe umfasst, von denen drei (E1-E3, E1'-E3') voneinander gleichmäßig um 120° beabstandet sind und die Anregungsspulen (A, B, C, A', B', C') lagern, und dass das magnetische Element fünf Polschuhpaare aufweist.

7. Garnzuführer nach Anspruch 6,
**dadurch gekennzeichnet, dass** das magnetische Element eine Anzahl von Polschuhpaaren aufweist, die ein Mehrfaches von fünf ist.

8. Garnzuführer nach Anspruch 3,
**dadurch gekennzeichnet, dass** der Stator acht Polschuhe umfasst, von denen vier (E1'b, E2'b, E3'b, E4'b) voneinander gleichmäßig in rechten Winkeln beabstandet sind und zugehörige Anregungsspulen (A'b, B'b, C'b, D'b) lagern, und dass die dünne Scheibe (Db) fünf Polschuhpaare aufweist.

9. Garnzuführer nach einem der Ansprüche 1 bis 8,
wobei der Motor (M, M') durch eine Steuereinheit (UC) über eine elektronische Stromversorgungseinheit gesteuert ist, **dadurch gekennzeichnet, dass** mehrere Hall-Sensoren (H1-H3, H1', H3') in den Winkellücken zwischen den Spulen nahe dem magnetischen Element angeordnet und dazu angeschlossen sind, Positionssignale an die Steuereinheit zu senden.

## Revendications

1. Dispositif d'alimentation pour métier à tisser qui comprend une bobine (R) d'enroulement de fil actionnée par un aimant permanent, un moteur synchrone sans balais pour extraire le fil d'une bobine (RO) et pour alimenter en fil une machine textile (MF) située en aval, ledit moteur (M, M') comprenant un stator (STA, STA') qui consiste en un logement creux essentiellement cylindrique qui présente au moins trois sabots polaires allongés (E1 à E3, E1'à E3') qui présentent des bobines d'excitation respectives (A, B, C, A', B', C') enroulées autour d'eux et un rotor magnétique supporté de façon coaxiale sur l'arbre moteur (AM, AM') près des bobines, **caractérisé en ce qu'**au moins un sabot polaire allongé exempt de bobines d'excitation est disposé entre chaque paire de patins polaires adjacents engagés par les bobines et **en ce que** ledit rotor magnétique comprend un élément magnétique qui présente un profil circulaire avec plusieurs pôles alternés.

2. Dispositif d'alimentation de fil selon la revendication 1, **caractérisé en ce que** ledit élément magnétique consiste en un mince cylindre (MC) fabriqué en un matériau magnétique polarisé de façon radiale avec des pôles alternés et lesdits patins polaires (E1, E2, E3) font saillie radialement vers l'intérieur du stator autour de l'axe de rotation du rotor.

3. Dispositif d'alimentation de fil selon la revendication 1, **caractérisé en ce que** ledit élément magnétique consiste en un mince disque (D) constitué d'un matériau magnétique qui est polarisé de façon longitudinale avec des pôles alternés en direction de son épaisseur et lesdits patins polaires (E1'à E3', E1'b à E4'b) font saillie parallèlement à l'axe de rotation du rotor.

4. Dispositif d'alimentation de fil selon l'une quelconque des revendications 1 à 3, **caractérisé en ce que** ledit stator comprend neuf sabots polaires allongés, dont trois (E1 à E3, E1' à E3') sont équidistants à 120° les uns des autres et supportent les bobines d'excitation respectives (A, B, C, A', B', C'), et **en ce que** ledit élément magnétique présente quatre paires de sabots polaires.

5. Dispositif d'alimentation de fil selon la revendication 4, **caractérisé en ce que** ledit élément magnétique présente un nombre de paires de sabots polaires qui est un multiple de quatre.

6. Dispositif d'alimentation de fil selon l'une quelconque des revendications 1 à 3, **caractérisé en ce que** ledit stator comprend neuf patins polaires allongés, dont trois (E1 à E3, E1' à E3') sont équidistants à 120° les uns des autres et supportent lesdites bobines d'excitation (A, B, C, A', B', C'), et ledit élément magnétique présente cinq paires de sabots polaires.

7. Dispositif d'alimentation de fil selon la revendication 6, **caractérisé en ce que** ledit élément magnétique présente un nombre de paires de patins polaires qui est un multiple de cinq.

8. Dispositif d'alimentation de fil selon la revendication 3, **caractérisé en ce que** ledit stator comprend huit sabots polaires, quatre de ceux-ci (E1'b, E2'b, E3'b, E4'b) sont équidistants à angle droit les uns des autres et supportent les bobines d'excitation respectives (A'b, B'b, C'b, D'b) et ledit mince disque (Db) présente cinq paires de sabots polaires.

9. Dispositif d'alimentation de fil selon l'une quelconque des revendications 1 à 8, dans lequel le moteur (M, M') est contrôlé par une unité de contrôle (UC) via un bloc d'alimentation électronique, **caractérisé en ce que** plusieurs détecteurs de Hall (H1 à H3, H1', H3') sont disposés dans les intervalles angulaires entre les bobines près de l'élément magnétique et sont raccordés pour envoyer des signaux de position à ladite unité de contrôle.
